# EUROPEAN PATENT APPLICATION

(11) **EP 4 199 310 A1**
(43) Date of publication of application: **21.06.2023**
(21) Application number: 21214498.4
(22) Date of filing: 14.12.2021
(51) Int. Cl.: H02K 1/14, H02K 1/24

(54) **A ROTOR FOR A ROTARY ELECTRIC MACHINE**

(71) Applicant: Valeo eAutomotive Germany GmbH, 91056 Erlangen (DE)
(72) Inventor: Schlereth, Alexander, 97616 Bad Neustadt a.d.Saale (DE); Wolf, Nico, 97616 Bad Neustadt a.d.Saale (DE); BACH, Regina, 97616 Bad Neustadt a.d.Saale (DE); Wieczorek, Christoph, 97616 Bad Neustadt a.d.Saale (DE); Siepker, Carsten, 97616 Bad Neustadt a.d.Saale (DE)
(74) Representative: Valeo Powertrain Systems

(57) **Abstract**

The invention concerns a rotor (3) for a rotary electric machine, the rotor (3) having an axis of rotation and comprising:
- a rotor body (7) comprising a hub (10) to be mounted on a rotor shaft (5) and a plurality of teeth (11) protruding radially from the hub;
- a plurality of field coils (15) each wound around a tooth of the plurality of teeth;
characterized in that said rotor body (7) comprises a plurality of individual parts (12) each having a portion (14) of the hub and a tooth (11) of the plurality of teeth, the individual parts being distinct parts and fixed together.

## Description

### FIELD OF THE INVENTION

The present invention belongs in particular to the field of rotary electric machines configured to be on board of an automotive vehicle, such as an electric vehicle or a hybrid vehicle. The vehicle can be of any type, such as a land, air or sea vehicle.

The present invention relates in particular to a rotor for a rotary electric machine.

### BACKGROUND OF THE INVENTION

As is known, an electric or a hybrid automotive vehicle presents an electric drive comprising a rotary electric machine which needs to be supplied with electric power, for instance by a high voltage power supply battery, to deliver a mechanical power in order to ensure propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, such as the wheels of the vehicle.

In particular, it is known to have the rotor separately excited using a field coil. This type of rotors is commonly referred as wound rotors or slip ring rotors. Such a rotor comprises a rotor body formed of a stack of laminations and has a plurality of teeth projecting radially. Then, the field coil is configured to be wound around each of the plurality of teeth.

A conventional solution for mounting the rotor body of the rotor shaft relies on having an outer circumference of the rotor shaft slightly higher than an inner circumference of the rotor body. Then, the rotor body is mounted on the rotor shaft by press-fitting.

In the state of the art, the rotor body is made integral, and winding the coils on the teeth requires the use of a winding tool to be placed in the space between the teeth. Winding field coils on such a rotor appears to be a complex operation. Furthermore, the presence of the winding tool makes it impossible to fill the whole space with copper wires. The filling ratio is limited by the presence of the winding tool.

In this context, an objective of the present invention is to provide a rotor and a method for producing the rotor, that is simpler and provides improved electric performances.

### SUMMARY OF THE INVENTION

The present invention concerns a rotor for a rotary electric machine, the rotor having an axis of rotation and comprising:
- a rotor body comprising a hub to be mounted on a rotor shaft and a plurality of teeth protruding radially from the hub;
- a plurality of field coils each wound around a tooth of the plurality of teeth;
characterized in that said rotor body comprises a plurality of individual parts each having a portion of the hub and a tooth of the plurality of teeth, the individual parts being distinct parts and fixed together. Notably the individual parts are fixed together by coming directly in contact one with another.

The invention offers the advantages that it is possible to wind the field coils on the corresponding tooth before assembling the individual parts together. It is thus possible to wind more turns of field coil around each tooth and to have the space between two teeth filled with a higher number of wires. The filling ratio is thus improved, providing improved electrotechnics performances. In the state of the art, the rotor body is made integral, and winding the coils on the teeth requires the use of a winding tool to be placed in the space between the teeth. This presence of this tool makes it impossible to fill the whole space with copper wires.

The invention further offers simplified assembly process, with potential advantages in process machines and logistics.

According to an aspect of the invention, each individual part comprises a single tooth of the plurality of teeth.

According to an aspect of the invention, the rotor body comprise six individual parts forming six teeth in total, and each tooth has a field coil.

According to an aspect of the invention, all individual parts of the rotor body are identical to each other.

According to an aspect of the invention, adjacent individual parts are joined together along a lateral junction interface that extends parallel to the axis of rotation.

According to an aspect of the invention, the hub portion of the individual part comprises a hook on the lateral junction interface and the adjacent individual part comprises a groove configured to receive the hook.

According to an aspect of the invention, the hook and the groove extend along the whole length of the individual parts, said length being measured parallel to the axis of rotation.

According to an aspect of the invention, the hook and the groove are pressed one on another.

According to an aspect of the invention, the groove of the individual part has a first longitudinal cavity that is opened towards the lateral junction interface and a second longitudinal cavity that extends from the first cavity and that is smaller than the first longitudinal cavity, and the hook of the adjacent individual part has a first longitudinal rib parallel to the axis of rotation and a second longitudinal rib extending from the first rib, said first rib being inserted in the first cavity and the second rib being inserted in the second cavity.

According to an aspect of the invention, the hub portions of the individual parts are all fixed one to the other by connections with hooks and grooves.

According to an aspect of the invention, the individual parts are fixed together in a mechanical manner by press fitting, with or without additional welding to further enhance fixation of the individual parts.

According to an aspect of the invention, the individual parts are fixed one with another via a centrifugal force exerted by the press-fitted shaft.

According to an aspect of the invention, the field coil wound on a tooth of the plurality of teeth is at a non-zero distance from the field coil wound on the adjacent tooth.

According to another aspect of the invention, the field coil wound on a tooth of the plurality of teeth is in contact with the field coil wound on the adjacent tooth.

The invention provides a higher filling ratio corresponding to the presence of more copper in the space between teeth.

According to an aspect of the invention, the rotor comprises a rotor shaft configured to rotate around the axis (X) of rotation, and the individual parts assembled all together are maintained by press fitting on the shaft.

The invention also relates to an individual part for a rotary electric machine rotor, said part having a hub portion of a hub and a tooth for winding a field coil, said part having a hook or a groove.

According to an aspect of the invention, the individual parts are formed of a stack of laminations.

The invention also relates to a rotary electric machine for an electric or a hybrid vehicle, comprising a rotor as disclosed above.

The invention also relates to a method for producing a rotor, said rotor having a rotor body comprising a hub to be mounted on a rotor shaft and a plurality of teeth protruding radially from the hub, said rotor body comprises a plurality of individual parts each having a portion of the hub and a tooth of the plurality of teeth, the individual parts being distinct parts, the method comprising the following successive steps:
- winding a field coil on each tooth of the individual part;
- then, assembling the individual parts together prior to mounting to a rotor shaft;
- mounting the individual parts on the rotor shaft so that a press fit force is exerted between the individual parts and the rotor shaft.

According to an aspect of the invention, during the step of assembling the individual parts together prior to mounting to a rotor shaft, the individual parts are connected together with clearance.

For instance, hooks and grooves are made with such dimensions that the hooks are received in the grooves with a clearance. It is convenient to have such a clearance so that the relative position of the individual parts can be adjusted during the mounting on the rotor shaft.

The outer circumference of the rotor shaft is slightly higher than an inner circumference of the hub of the rotor body. The rotor body is mounted on the rotor shaft by press-fitting

According to an aspect of the invention, the invention relates to the rotary electric machine comprising the rotor as described previously. The rotary electric machine especially comprises a stator, the stator surrounding coaxially the rotor.

The invention also relates to an electric drive system comprising the rotary electric machine and an inverter configured to convert a direct current voltage coming from a high-voltage power supply battery into an alternating current voltage so as to drive the rotary electric machine. The AC voltage may be a multiphase AC voltage, especially a three-phase voltage.

The invention also relates to an electric of a hybrid vehicle, comprising the electric drive system for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic diagram of an automotive electric or hybrid vehicle comprising a rotary electric machine according to an embodiment of the invention;
Figure 2 is a schematic diagram of a rotor and a stator of the rotary electric machine of Figure 1;
Figure 3 is a schematic diagram of a partial cut view of the rotor of Figure 2, before mounting on the rotor shaft;
Figure 4 is a schematic diagram of a partial cut view of the rotor of Figure 2, after mounting on the rotor shaft;
Figure 5 is a schematic diagram of a partial cut view of another example of the rotor according to an embodiment of the invention.

### DETAILED DESCRIPTION

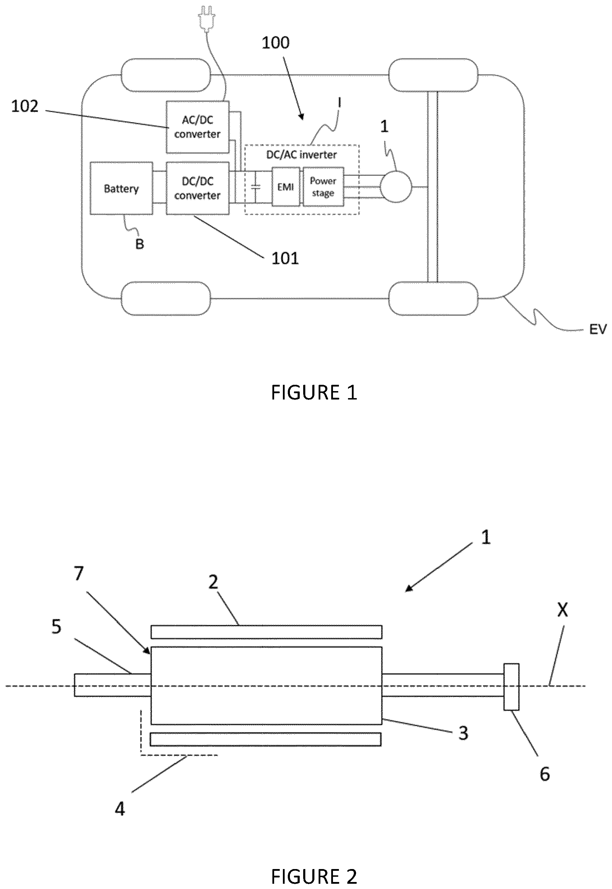

Figure 1 represents schematically an electric vehicle or a hybrid electric automotive vehicle EV comprising wheels and an electric drive system 100 configured to drive at least indirectly at least one of the wheels of the vehicle. The vehicle may comprise a high-voltage power supply battery B, preferably a rechargeable battery, for providing electric power to the electric drive.

The electric drive system 100 comprises a rotary electric machine 1 and an inverter I configured to convert a direct current (DC) voltage coming from the high-voltage power supply battery B into an alternating current (AC) voltage in order to drive the rotary electric machine 1. The rotary electric machine 1 may in particular be a three-phase rotary electric machine supplied with a three-phase AC voltage. A DC/DC converter 101 is provided between the battery B and the inverter I. An AC/DC converter 102 is provided between a network power supply and the inverter I in a known manner.

As illustrated in Figure 2, the rotary electric machine 1 comprises a stator 2, referring to the fixed part of the rotary electric machine, and a rotor 3, referring to the rotating part of the rotary electric machine. The stator 2 presents an annular shape and surrounds coaxially the rotor 3. The rotary electric machine 1 comprises a casing 4 covering the stator 2 and the rotor 3. In a known manner, the stator 2 comprises a stator body formed of a stack of laminations having a plurality of stator teeth projecting radially, and stator windings wound around the stator teeth.

The rotor 3 is a separately excited rotor, also commonly referred as a wound rotor or a slip ring rotor. In this type of rotor, the rotor comprises field coils connected to an external power supply through slip rings 6. The slip rings 6 correspond to electro-mechanical devices configured to allow the exchange of electric power between the field coils and the external power supply.

The rotor 1 comprises a rotor shaft 5 configured to rotate around an axis X of rotation, and a rotor body 7 being configured to be mounted on the rotor shaft 4.

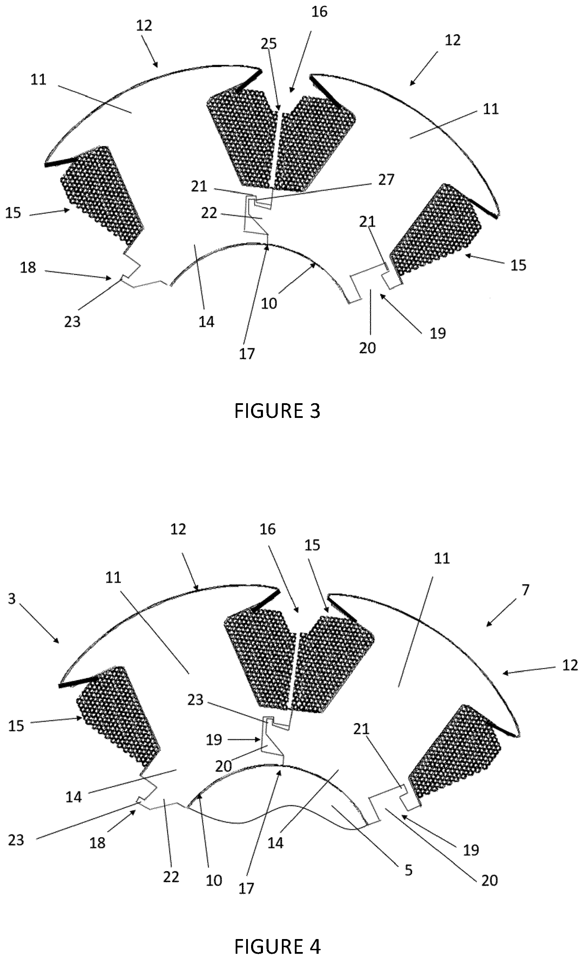

In the present embodiment as disclosed in Figure 4, the rotor 3 comprises:
- the rotor body 7 comprising a hub 10 to be mounted on the rotor shaft 5 and a plurality of teeth 11 protruding radially from the hub 10;
- a plurality of field coils 15 each wound around a tooth 11 of the plurality of teeth.

The rotor body 7 comprises a plurality of individual parts 12 each having a portion 14 of the hub and a tooth 11 of the plurality of teeth, the individual parts 12 being distinct parts and fixed together. The individual parts 12 are each formed of a stack of laminations.

The invention offers the advantages that it is possible to wind the field coils 15 on the corresponding tooth 11 before assembling the individual parts 12 together. It is thus possible to wind more turns of field coil around each tooth 11 and to have the space 16 between two teeth 11 filled with a higher number of wires. The filling ratio is thus improved providing improved

Each individual part 12 comprises a single tooth 11 of the plurality of teeth.

In the present embodiment of the invention, the rotor body 7 comprises six individual parts 12 forming six teeth in total, and each tooth 11 has a field coil 15.

All individual parts 12 of the rotor body 7 are identical to each other.

Adjacent individual parts 12 are joined together along a lateral junction interface 17 that extends parallel to the axis of rotation X.

The hub portion 14 of the individual part 12 comprises a hook 18 on the lateral junction interface 17 and the adjacent individual part 12 comprises a groove 19 configured to receive the hook 18.

The hook 18 and the groove 19 extend along the whole length of the individual parts 12, said length being measured parallel to the axis of rotation X.

The hook 18 and the groove 19 are pressed one on the other so as to grip the hook 18 in the groove 19.

The groove 19 of the individual part 12 has a first longitudinal cavity 20 that is opened towards the lateral junction interface 17 and a second longitudinal cavity 21 that extends from the end of first cavity 20 and that is smaller than the first longitudinal cavity 20; and the hook 19 of the adjacent individual part 12 has a first longitudinal rib 22 parallel to the axis of rotation X and a second longitudinal rib 23 extending from a longitudinal end of the first rib 22 and smaller in cross section than the first rib 22, said first rib 22 being inserted in the first cavity 20 and the second rib 23 being inserted in the second cavity 21.

Each hub portion 14 of the individual part comprises a hook 18 on a lateral junction interface 17 and a groove 19 on the opposite lateral junction interface 17.

The hub portions 14 of the individual parts 12 are all fixed one to the other by connections with hooks 18 and grooves 19.

The individual parts 12 are fixed together in a mechanical manner by press fitting, with or without additional welding to further enhance their fixation. Such welding could be located at the axial ends of the rotor body 7, along the lateral junction interfaces 17 of two adjacent individual parts 12.

In the example illustrated in Figures 3 and 4, the field coil 15 wound on a tooth 11 of the plurality of teeth is at a non-zero distance from the field coil 15 wound on the adjacent tooth 11. In other words, there is a small gap 25 between the two adjacent field coils 15.

The individual parts 12 assembled all together are maintained by press fitting on the rotor shaft 5.

The method for producing the rotor 3 comprises the following successive steps:
- winding the field coil 15 on each tooth 11 of the individual part 12;
- then, assembling the individual parts 12 together prior to mounting to a rotor shaft 5;
- mounting the individual parts 12 on the rotor shaft 5 so that a press fit force is exerted between the individual parts 12 and the rotor shaft 5.

During the step of assembling the individual parts 12 together prior to mounting to the rotor shaft, the individual parts are connected together with clearance.

As visible in Figure 3, prior to mounting to the rotor shaft, the hook 18 and groove 19 are made with such dimensions that the hook 18 is received in the groove 19 with a clearance 27. It is convenient to have such a clearance 27 so that the relative position of the individual parts 12 can be adjusted during the mounting on the rotor shaft 5.

The outer circumference of the rotor shaft 5 is slightly higher than an inner circumference of the hub 10 of the rotor body 7 so that the rotor body 7 is mounted on the rotor shaft 5 by press-fitting, and the hook 18 and the groove 19 are strongly attached one to the other without clearance, as illustrated in Figure 4. The hook 18 and the groove 19 are firmly interlocked. Therefore, the individual parts 12 are fixed one with another owing to a centrifugal force exerted by the press-fitted shaft 5.

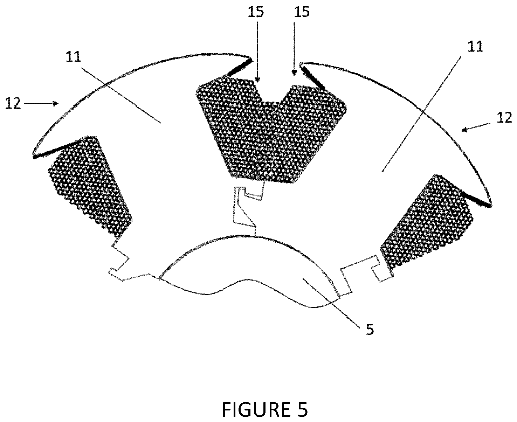

In another embodiment illustrated in Figure 5, the field coil 15 wound on a tooth 11 of the plurality of teeth is in contact with the field coil 15 wound on the adjacent tooth 11.

The invention provides a higher filling ratio corresponding to the presence of more copper in the space between teeth.

Thanks to the invention, it is possible to wind the field coil 15 on each tooth 11 before assembling the teeth 11 together. Winding operations are simpler, and coils can be wound with more turns. There is no lost space that can not be filled in with wire copper.

The field coil 5 forms coil ends projecting axially from respectively two axial ends of the rotor body 7. The rotor 3 may further comprise two end plates configured to come against the two axial ends of the rotor body 7, such that to provide a mechanical holding of the stack of laminations. The two end plates are especially located between the rotor body 7 and the coil ends such that to electrically insulate the field coil from the rotor body 7.

Each tooth 11 is made of a stack of laminations.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A rotor (3) for a rotary electric machine (1), the rotor (3) having an axis (X) of rotation and comprising:
- a rotor body (7) comprising a hub (10) to be mounted on a rotor shaft (5) and a plurality of teeth (11) protruding radially from the hub;
- a plurality of field coils (15) each wound around a tooth of the plurality of teeth;
**characterized in that** said rotor body (7) comprises a plurality of individual parts (12) each having a portion (14) of the hub and a tooth (11) of the plurality of teeth, the individual parts being distinct parts and fixed together.

2. The rotor (3) as claimed in claim 1, wherein each individual part (12) comprises a single tooth (11) of the plurality of teeth.

3. The rotor (3) as claimed in any of the preceding claims, wherein all individual parts (12) of the rotor body are identical to each other.

4. The rotor (3) as claimed in any of the preceding claims, wherein adjacent individual parts (12) are joined together along a lateral junction interface (17) that extends parallel to the axis (X) of rotation.

5. The rotor (3) as claimed in the previous claim, wherein the hub portion (14) of the individual part comprises a hook (18) on the lateral junction interface (17) and the adjacent individual part comprises a groove (19) configured to receive the hook.

6. The rotor (3) as claimed in the previous claim, wherein the hook (18) and the groove (19) extend along the whole length of the individual parts, said length being measured parallel to the axis of rotation.

7. The rotor (3) as claimed in any of claims 5 and 6, wherein the hook (18) and the groove (19) are pressed one on another.

8. The rotor (3) as claimed in any of claims 5 to 7, wherein the groove (18) of the individual part has a first longitudinal cavity (20) that is opened towards the lateral junction interface and a second longitudinal cavity (21) that extends from the first cavity and that is smaller than the first longitudinal cavity, and the hook (19) of the adjacent individual part has a first longitudinal rib (22) parallel to the axis of rotation (X) and a second longitudinal rib (23) extending from the first rib, said first rib being inserted in the first cavity and the second rib being inserted in the second cavity.

9. The rotor (3) as claimed in any of the preceding claims, wherein the field coil (15) wound on a tooth of the plurality of teeth is at a non-zero distance from the field coil wound on the adjacent tooth.

10. The rotor (3) as claimed in any of claims 1 to 8, wherein the field coil (15) wound on a tooth of the plurality of teeth is in contact with the field coil wound on the adjacent tooth.

11. The rotor (3) as claimed in any of the preceding claims, wherein it comprises a rotor shaft (5) configured to rotate around the axis (X) of rotation, and the individual parts (12) assembled all together are maintained by press fitting on the shaft.

12. The rotor as claimed in the preceding claim 11, wherein the individual parts (12) are fixed one with another via a centrifugal force exerted by the press-fitted shaft (5).

13. An individual part (12) for a rotary electric machine rotor, said part having a hub portion of a hub and a tooth for winding a field coil, said part having a hook (18) or a groove (19).

14. A method for producing a rotor (1), said rotor having a rotor body (7) comprising a hub to be mounted on a rotor shaft a3d a plurality of teeth protruding radially from the hub, said rotor body comprises a plurality of individual parts each having a portion of the hub and a tooth of the plurality of teeth, the individual parts (12) being distinct parts, the method comprising the following successive steps:
- winding a field coil (15) on each tooth (11) of the individual part;
- then, assembling the individual parts together prior to mounting to a rotor shaft (5);
- mounting the individual parts (12) on the rotor shaft so that a press fit force is exerted between the individual parts and the rotor shaft.

15. A method according to the previous claim, wherein, during step of assembling the individual parts together prior to mounting to a rotor shaft, the individual parts (12) are connected together with clearance.
